(19) Europäisches Patentamt
European Patent Office
Office européen des brevets

(11) **EP 2 593 523 B1**

(12) **FASCICULE DE BREVET EUROPEEN**

(45) Date de publication et mention
de la délivrance du brevet:
**31.05.2017 Bulletin 2017/22**

(21) Numéro de dépôt: **11741672.7**

(22) Date de dépôt: **13.07.2011**

(51) Int Cl.:
**C09J 105/00** (2006.01)  **C09J 105/08** (2006.01)
**C08L 5/08** (2006.01)  **C08L 97/02** (2006.01)

(86) Numéro de dépôt international:
**PCT/FR2011/051687**

(87) Numéro de publication internationale:
**WO 2012/007697 (19.01.2012 Gazette 2012/03)**

(54) **COMPOSITION ADHÉSIVE COMPRENANT DU CHITOSANE DÉSACÉTYLE**

HAFTZUSAMMENSETZUNG MIT DEACETYLIERTEM CHITOSAN

ADHESIVE COMPOSITION INCLUDING DEACETYLATED CHITOSAN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.07.2010 FR 1055820**

(43) Date de publication de la demande:
**22.05.2013 Bulletin 2013/21**

(73) Titulaires:
• **Université Blaise Pascal Clermont II
63006 Clermont Ferrand Cedex 1 (FR)**
• **Institut National de Recherche en Sciences et
Technologies pour l'Environnement et
l'Agriculture
92160 Antony (FR)**

(72) Inventeurs:
• **MATHIAS, Jean-Denis
F-63730 Plauzat (FR)**
• **GREDIAC, Michel
F-63170 Aubiere (FR)**
• **DE BAYNAST, Hélène
F-63200 Mozat (FR)**
• **MICHAUD, Philippe
F-63160 Billom (FR)**
• **PATEL, Anil
District-Bilaspur, Chhattisgarh
495119 (IN)**

(74) Mandataire: **Lavoix
62, rue de Bonnel
69448 Lyon Cedex 03 (FR)**

(56) Documents cités:
**WO-A1-2005/033243 US-A- 4 659 700**

• **KENJI UMEMURA ET AL: "Development of new
natural polymer-based wood adhesives III:
effects of glucose addition on properties of
chitosan", JOURNAL OF WOOD SCIENCE ;
OFFICIAL JOURNAL OF THE JAPAN WOOD
RESEARCH SOCIETY, SPRINGER-VERLAG, TO,
vol. 56, no. 5, 7 juin 2010 (2010-06-07), pages
387-394, XP019807514, ISSN: 1611-4663 cité dans
la demande**

Remarques:
Le dossier contient des informations techniques
présentées postérieurement au dépôt de la demande
et ne figurant pas dans le présent fascicule.

## Description

L'invention concerne une composition adhésive ainsi qu'un procédé de collage comprenant l'application de ladite composition. L'invention concerne plus particulièrement une composition adhésive comprenant au moins un chitosane désacétylé, un acide et un composé additionnel.

Le collage structural est une technologie couramment utilisée pour unir tous types de matériaux. Il trouve son application dans de nombreux domaines industriels comme le bâtiment, la construction automobile, aéronautique, ferroviaire, navale ou encore les structures bois ou pour fenêtres.

Le collage structural permet de réaliser des assemblages collés pouvant supporter des contraintes aussi importantes que les assemblages mécano-soudés.

Les adhésifs structuraux sont généralement conçus pour résister à des contraintes en cisaillement supérieures à 7 MPa.

Les adhésifs structuraux connus aujourd'hui sont composés de matériaux d'origine synthétique, tels que les polyuréthanes, les époxydes ou les acryliques et la présence de composés volatils organiques (COVs) ou d'autres composés potentiellement toxiques dans ces adhésifs représente une problématique importante pour la santé humaine et pour l'environnement.

Les polysaccharides ont été identifiés comme une alternative potentielle à l'utilisation des matériaux synthétiques, et notamment le chitosane. Des compositions adhésives comprenant du chitosane désacétylé solubilisé dans une solution d'acide acétique permettent d'améliorer le collage de plaques de contreplaqué (K.Umemura et al, Koen Yoshishu - Nippon Setchaku Gakkai Nenji Taikai, 2002, 40, 71-72). Cependant les compositions adhésives ainsi obtenues ne peuvent résister à des contraintes en cisaillement supérieures ou égales à 2 MPa.

D'autres composés ont été introduits dans des compositions adhésives à base de chitosane désacétylé pour en améliorer la force de collage. Des compositions comprenant un chitosane désacétylé solubilisé dans une solution d'acide acétique et associé à du glucose ont été décrites comme permettant d'améliorer le collage de plaques de contreplaqué (K.Umemura, *Development of new natural polymer-based wood adhésives III: effects of glucose addition on properties of chitosan,* Journal of Wood Science, 2010). Néanmoins, ces compositions ne peuvent résister à des contraintes en cisaillement supérieures ou égales 2,5 MPa.

Par conséquent, il existe aujourd'hui le besoin d'obtenir des compositions adhésives à base de matériaux d'origine naturelle ayant des propriétés adhésives au moins équivalentes aux matériaux synthétiques et permettant de limiter voir de supprimer les risques sur la santé et l'environnement.

La présente invention permet d'apporter une solution à tout ou partie des problèmes de l'état de la technique.

Un premier objectif de la présente invention est donc de fournir une composition adhésive à base de chitosane désacétylé et pouvant être appliquée au collage structural, ainsi qu'un procédé de collage structural par application de ladite composition.

Un second objectif de la présente invention est de fournir une composition adhésive à base de chitosane désacétylé facile et peu coûteuse à formuler, ainsi qu'un procédé de collage structural simple et peu coûteux à mettre en oeuvre.

Un troisième objectif de la présente invention est de fournir une composition à base de chitosane désacétylé présentant à la fois des propriétés adhésives suffisantes pour le collage structural et des propriétés antimicrobiennes.

Un quatrième objectif de la présente invention est de fournir une composition à base de chitosane désacétylé présentant des propriétés adhésives suffisantes pour le collage structural tout en limitant les risques de retrait après application.

Ainsi la présente invention a tout d'abord pour objet une composition adhésive comprenant :

(a) de 3 à 10% en poids d'au moins un chitosane désacétylé ayant un degré de désacétylation supérieur ou égal à 75% ;
(b) de 0,5 à 5% en poids d'au moins un acide organique ou inorganique ;
(c) au moins un composé choisi parmi :

(c1) de 0,001 à 8% en poids d'un composé polyanionique,
(c2) de 0,001 à 2% en poids d'un polyol de formule $C_nH_{2n+2}O_n$ dans laquelle n représente un nombre entier compris entre 2 et 20,

(d) une quantité complémentaire d'un support aqueux.

Selon l'invention, la composition comprend de 4 à 9% de chitosane, de préférence de 4 à 6%.

Selon l'invention, le chitosane a une masse molaire allant de 5 000 à 1 200 000 g/mol, de préférence de 10 000 à 500 000 g/mol.

Comme exemple de chitosane, on peut choisir le produit commercialisé par la société SIGMA ALDRICH sous la référence C3646-500G.

Selon l'invention, la mise en oeuvre d'un acide permet la solubilisation du chitosane désacétylé dans la composition selon l'invention.

Selon l'invention, la composition comprend avantageusement de 1 à 3% d'acide.

De manière avantageuse, l'acide est en solution aqueuse.

De manière avantageuse, la solution aqueuse d'acide a un pH allant de 2 à 4, de préférence allant de 2 à 2,5.

Selon l'invention, l'acide est avantageusement un acide inorganique choisi parmi les acides inorganiques connus. L'acide sulfurique, l'acide chlorhydrique ou l'acide nitrique sont cités comme exemples, de manière avantageuse, l'acide sulfurique.

Selon l'invention, l'acide est avantageusement un acide organique choisi parmi les acides organiques connus. De manière avantageuse, l'acide organique est choisi parmi les acides carboxyliques, de préférence l'acide acétique.

Selon l'invention, la composition comprend de 0,01 à 5% de composé (c1).

Selon l'invention, le composé (c1) est avantageusement choisi parmi les acides hydroxycarboxyliques, les acides polycarboxyliques, les acides hydroxypolycarboxyliques, les polysaccharides, leurs sels ou leurs mélanges.

Selon l'invention, les polysaccharides sont choisis parmi les alginates, les carraghénanes, leurs sels ou leurs mélanges, de préférence parmi les alginates de sodium ou les carraghénanes.

De manière avantageuse, la composition comprend de 2 à 5% de composé c1).

Selon l'invention, le composé (c1) est choisi parmi les sels d'acide citrique ou les sels d'acide succinique, de préférence choisi parmi le citrate de trisodium dihydraté.

De manière avantageuse, la composition comprend de 0,05 à 1% de composé c1).

Selon l'invention, la composition comprend avantageusement de 0,5 à 1,5 % de composé (c2).

Selon l'invention, le composé (c2) est un polyol pour lequel n est compris entre 2 et 10. De manière avantageuse, le polyol est choisi parmi le glycérol ou le mannitol.

Selon l'invention, la composition 1 comprend de 4 à 6% de chitosane ou de 1 à 3% d'acide ou de 0,01 à 5% de composé (c1) ou de 0,5 à 1,5% de composé (c2) ou leurs combinaisons totales ou partielles.

Selon l'invention, la composition comprend les composés (a) et (b) en un ratio (a)/(b) allant de 3/1 à 10/3, de préférence allant de 4/1 à 6/2.

Selon l'invention, la composition comprend les composés (a) et (c1) en un ratio (a)/(c1) allant de 1/2 à 200/1, de préférence allant de 4/1 à 120/1.

Selon l'invention, la composition comprend les composés (a) et (c2) en un ratio (a)/(c2) allant de 2/1 à 12/1, de préférence allant de 8/3 à 7/1.

De manière avantageuse, le support (d) est de l'eau. Le support (d) peut également comprendre des adjuvants ; les colorants ou les conservateurs sont cités comme exemples.

En outre la composition selon l'invention peut également comprendre une charge polysaccharidique (e).

De manière avantageuse, la charge polysaccharidique (e) est différente du composé (c1).

Selon l'invention, la charge polysaccharidique (e) est choisie parmi les amidons, les fractions d'amidon et les farines amylacées.

De manière avantageuse, la charge polysaccharidique (e) est choisie parmi l'amidon de céréales, de pommes de terre, de froment ou de manioc, de préférence un amidon de céréales.

Par fraction d'amidon, on entend un ou plusieurs composés issus du fractionnement de l'amidon.

De manière avantageuse, la charge polysaccharidique (e) est choisie parmi l'amylopectine ou l'amylose.

Selon l'invention, la charge polysaccharidique (e) est choisie parmi la farine de céréales, de châtaignes, de marrons d'Inde, de millet, de riz, de sarrasin, de quinoa, d'épeautre, de soja, de pois, de pommes de terre ou de manioc.

Selon l'invention, la composition comprend de 0,1 à 20% de préférence de 1 à 15% en poids de charge polysaccharidique (e).

Selon l'invention, la composition comprend avantageusement les composés (a) et (e) dans un ratio allant de 1/10 à 1/1.

De manière avantageuse, l'invention concerne une composition adhésive comprenant :

(a) de 3 à 10% en poids d'au moins un chitosane désacétylé ayant un degré de désacétylation supérieur ou égal à 75% ;
(b) de 0,5 à 5% en poids d'au moins un acide organique ou inorganique ;

(c1) de 0,001 à 8% en poids d'un composé polyanionique ;
(c2) de 0,001 à 2% en poids d'un polyol de formule $C_nH_{2n+2}O_n$ dans laquelle n représente un nombre entier compris entre 2 et 10,

(d) une quantité complémentaire d'un support aqueux.

De manière avantageuse, la composition comprend en outre de 0,1 à 20% d'une charge polysaccharidique (e).

Les différentes caractéristiques présentées pour la charge polysaccharidique (e) s'appliquent également à ce mode de réalisation avantageux.

L'invention concerne également une composition adhésive de base comprenant :

(a) au moins un chitosane désacétylé ayant un degré de désacétylation supérieur ou égale à 75%,

(b) au moins un acide organique ou inorganique,

(c) au moins un composé choisi dans le groupe constitué par :

(c1) les composés polyanioniques,

(c2) les polyols de formule $C_nH_{2n+2}O_n$, n étant compris entre 2 et 20,

(d) un support aqueux.

Selon l'invention, la composition adhésive de base comprend en outre une charge polysaccharidique (e).

Les différentes caractéristiques présentées pour le chitosane désacétylé (a) et l'acide (b) ainsi que celles relatives à leur ratio s'appliquent également à la composition adhésive de base selon l'invention.

Les différentes caractéristiques présentées pour les composés (c1), (c2), (e) et le support (d) ainsi que celles relatives aux ratios (a)/(c1), (a)/(c2) et (a)/(e) s'appliquent également à la composition adhésive de base selon l'invention.

Selon l'invention, la composition adhésive possède également des propriétés antimicrobiennes, permettant ainsi de limiter, voire de supprimer le risque de prolifération microbienne au sein de l'objet ou de la structure comprenant ladite composition et améliorant ainsi sa durée de vie.

Selon l'invention, la composition adhésive possède également des propriétés relatives au retrait après application améliorées, permettant ainsi de réduire la quantité de composition à appliquer pour obtenir une épaisseur adhésive suffisante pour le collage structural.

Par retrait, on entend la réduction de l'épaisseur, et donc du volume occupée par une couche de composition après application.

Selon l'invention, la composition adhésive a une résistance en cisaillement allant de 7 à 100 MPa, de préférence allant 10 à 50 MPa.

Un autre objet de la présente invention concerne un procédé de préparation d'une composition adhésive comprenant le mélange :

(a) de 3 à 10% en poids d'au moins un chitosane désacétylé ayant un degré de désacétylation supérieur ou égal à 75% ;

(b) de 0,5 à 5% en poids d'au moins un acide organique ou inorganique ;

(c) d'au moins un composé choisi parmi :

(c1) de 0,001 à 8% en poids d'un composé polyanionique ou

(c2) de 0,001 à 2% en poids d'un polyol de formule $C_nH_{2n+2}O_n$ dans laquelle n représente un nombre entier compris entre 2 et 20 ;

(d) d'une quantité complémentaire d'un support aqueux.

En outre, le mélange mis en oeuvre pour le procédé de préparation selon l'invention peut comprendre une charge polysaccharidique (e).

De manière avantageuse, le procédé est utilisé pour la préparation d'une composition adhésive selon l'invention.

L'ensemble des différentes caractéristiques ou préférences de la composition selon l'invention présentées pour le chitosane désacétylé (a) et l'acide (b) ainsi que celles relatives à leur ratio s'appliquent également au procédé de préparation selon l'invention.

L'ensemble des différentes caractéristiques ou préférences de la composition selon l'invention présentées pour les composés (c1), (c2), (e) et le support (d) ainsi que celles relatives aux ratios (a)/(c1), (a)/(c2) et (a)/(e) s'appliquent également au procédé de préparation selon l'invention.

Un autre objet de la présente invention concerne une composition obtenue ou susceptible d'être obtenue par le procédé de préparation selon l'invention.

Un autre objet de l'invention concerne un procédé de collage par application d'une composition adhésive selon l'invention.

Un autre objet de la présente invention concerne un procédé de collage comprenant l'application d'une composition adhésive comprenant :

(a) de 3 à 10% en poids d'au moins un chitosane désacétylé ayant un degré de désacétylation supérieur ou égal à 75% ;
(b) de 0,5 à 5% en poids d'au moins un acide organique ou inorganique ;
(c) au moins un composé choisi parmi :

(c1) de 0,001 à 8% en poids d'un composé polyanionique,
(c2) de 0,001 à 2% en poids d'un polyol de formule $C_nH_{2n+2}O_n$ dans laquelle n représente un nombre entier compris entre 2 et 20,

(d) une quantité complémentaire d'un support aqueux.

En outre, la composition adhésive selon l'invention peut comprendre une charge polysaccharidique (e).

De manière avantageuse, le procédé de collage selon l'invention est mis en oeuvre pour le collage structural d'une structure par application de la composition adhésive sur la surface d'au moins un élément de la structure.

Par structure, on entend tout assemblage d'au moins deux éléments de même nature ou de natures différentes.

Selon l'invention, la composition adhésive est appliquée sur la surface de tous les éléments de la structure.

L'ensemble des différentes caractéristiques ou préférences de la composition selon l'invention présentées pour le chitosane désacétylé (a) et l'acide (b) ainsi que celles relatives à leur ratio s'appliquent également au procédé de collage selon l'invention.

L'ensemble des différentes caractéristiques ou préférences de la composition selon l'invention présentées pour les composés (c1), (c2), (e) et le support (d) ainsi que celles relatives aux ratios (a)/(c1), (a)/(c2) et (a)/(e) s'appliquent également au procédé de collage selon l'invention.

Selon le procédé de collage de l'invention, l'élément de la structure comprend un matériau d'origine naturelle, un métal ou ses alliages, une matière plastique, une céramique ou leurs mélanges.

De manière avantageuse, l'élément comprend un matériau cellulosique, de préférence du bois, un produit dérivé du bois, un sous-produit du bois.

De manière également avantageuse, l'élément comprend de l'aluminium ou ses alliages. L'alliage d'aluminium 2014 est cité comme exemple.

Selon l'invention, le procédé de collage peut comprendre une étape préliminaire de préparation par traitement chimique ou mécanique de la surface de la structure ou d'au moins un élément de la structure.

De manière avantageuse, le traitement est un traitement chimique, de préférence un traitement à la soude.

Un autre objet de l'invention concerne un objet composite comprenant une composition adhésive selon l'invention et au moins un élément comprenant un autre matériau.

Par objet composite, on entend tout objet comprenant au moins deux éléments pouvant être de même nature ou de natures différentes.

Selon l'invention, le matériau est choisi parmi les matériaux cellulosiques, les métaux et leurs alliages, les matières plastiques, les céramiques ou leurs mélanges. De manière avantageuse, le matériau est du bois, un produit dérivé du bois, un sous-produit du bois ou un alliage d'aluminium. L'alliage d'aluminium 2014 est cité comme exemple.

L'objet composite peut notamment se présenter sous la forme d'une structure en bois comprenant au moins deux éléments en bois fixés l'un à l'autre à l'aide de la composition adhésive selon l'invention. Des poutres, des poutrelles ou des armatures en bois sont citées comme exemples d'éléments en bois.

L'objet composite peut également se présenter sous la forme d'éléments en bois lamellés-collés couramment dénommés "lamellé-collé" comprenant des lamelles de bois collées à l'aide d'une composition selon l'invention. Des lamelles d'épicéa, de pin douglas sont citées comme exemples de lamelles de bois.

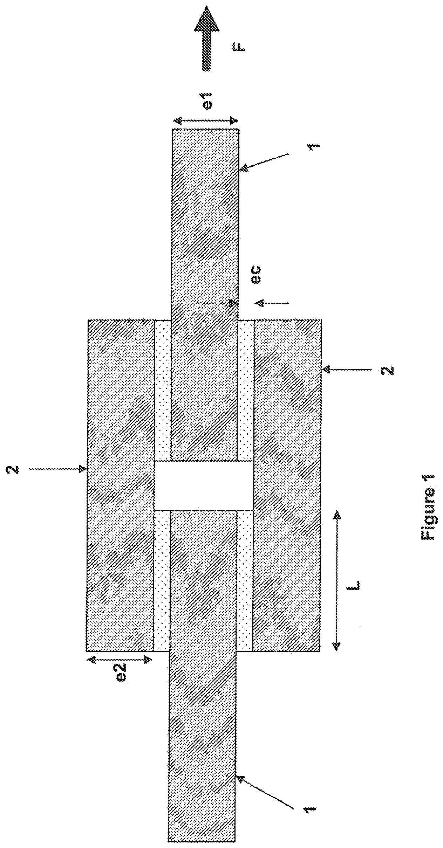

La figure 1 montre une éprouvette permettant de déterminer la résistance en cisaillement d'une composition adhésive selon l'invention.

Les différents objets de l'invention et leurs modes de réalisation seront mieux compris à la lecture des exemples qui suivent. Ces exemples sont donnés à titre indicatif, sans caractère limitatif.

Exemples :

Pour chacun des exemples suivants, les éprouvettes d'alliage d'aluminium ont été réalisées de la façon suivante.

Chaque éprouvette d'alliage d'aluminium était constituée de quatre éléments d'alliage d'aluminium 2014 de longueur égale à 150mm, de largeur égale à 20mm et d'épaisseur e1 et e2 égale à 2mm, 2 éléments extérieurs 2, et 2 éléments intérieurs 1. Au préalable, chaque élément d'alliage d'aluminium a été trempé dans du trichloréthylène pendant 30 min afin d'éliminer les huiles, chaque élément ayant été ensuite nettoyé avec un détergent et séché à température ambiante. Puis chaque élément a subi un traitement de surface par trempage dans une solution de soude 1 M pendant 1 heure. Puis chaque élément a été lavé minutieusement avec un détergent doux et conservé pendant 12h dans une solution aqueuse d'acide acétique à 2%. Puis chaque élément a été à nouveau lavé et séché à température ambiante.

La composition adhésive a été appliquée à la surface de chaque élément d'alliage d'aluminium intérieur 1 d'épaisseur $e_1$ pour former une couche d'épaisseur initiale $e_c$ de 1 mm, la couche finale obtenue étant plus mince après séchage, afin de former une éprouvette selon la figure 1. Chaque élément d'alliage d'aluminium 2, d'épaisseur $e_2$ a été fixé aux autres éléments 1 et maintenu pendant 48h à une température de 40°C. La longueur de chevauchement est égale à L.

Chaque éprouvette a ensuite été soumise à une mesure de la force de rupture. Pour cela, une méthode de mesure de traction s'appuyant sur la norme ASTM D3528 a été utilisée. L'appareil utilisé est une machine commercialisée par la société Zwick Roell sous la référence UTS Test System type BZC associé au logiciel Text-expert VII 02 software commercialisé par la société TestXpert Machine. Les éprouvettes sont soumises à un déplacement imposé suivant une vitesse de 0,005 mm/s jusqu'à rupture et la force de rupture F est ainsi mesurée pour chaque éprouvette.

A partir de la force de rupture, a été calculée la résistance en cisaillement de chaque composition adhésive exemplifiée exprimée en MPa et résultant de la formule mathématique suivante, tirée de la théorie de Volkersen (Volkersen, Luftfahrtforschung, 15, 1938, pp. 41-47) :

$$\tau(0) = \frac{G_c \sigma_0}{\sinh(\lambda_i L) e_c \lambda_i E_1} \left( \frac{E_1 e_1}{E_2 e_2} + \cosh(\lambda_i L) \right)$$

dans laquelle :

$\sigma_0 = F/S$,
S étant la section des éléments 1,
F correspondant à la force de rupture de l'éprouvette,
$e_1$ et $e_2$ correspondant aux épaisseurs des éléments 1 et 2,
$e_c$ correspondant à l'épaisseur de la composition adhésive,
$E_1$ et $E_2$ correspondant aux modules de Young des éléments 1 et 2,
L correspondant à la longueur de chevauchement des éléments 1 et 2,

$$\lambda_i = \sqrt{\frac{G_c}{e_c} \left( \frac{1}{e_1 E_1} + \frac{1}{e_2 E_2} \right)} \ ,$$

dans laquelle :

$G_c = E_c /(2(1 + \nu))$ et correspondant au module de cisaillement de la composition adhésive. Pour son calcul, on admet que le coefficient de poisson $\nu$ est égal à 0.3 et le module de Young $E_c$ a été mesuré à 2 GPa.

Exemple 1 : évaluation de la résistance en cisaillement de compositions adhésives selon l'invention

3 éprouvettes ont été réalisées en utilisant une composition selon l'invention comprenant respectivement 6% de chitosane désacétylé ayant un degré de désacétylation supérieur ou égal à 75%, 2% d'acide acétique et une teneur variable en citrate de trisodium dihydraté égale à 0,08, 0,14 et 0,5%. L'éprouvette de contrôle a été réalisée en utilisant une composition comprenant 6% de chitosane désacétylé ayant un degré de désacétylation supérieur ou égal à 75% et 2% d'acide acétique.

Les valeurs de résistance en cisaillement sont présentées dans le tableau I.

Tableau I

| Composition adhésive | Résistance en cisaillement (MPa) |
|---|---|
| Contrôle | 16,5 |
| 6% chitosane | 28,4 |

(suite)

| Composition adhésive | Résistance en cisaillement (MPa) |
|---|---|
| 2% acide acétique<br>0,08% citrate | |
| 6% chitosane<br>2% acide acétique<br>0,14% citrate | 29,8 |
| 6% chitosane<br>2% acide acétique<br>0,5% citrate | 24,5 |

Les résultats montrent que les compositions selon l'invention montrent une résistance en cisaillement améliorée.

Exemple 2: évaluation de la résistance en cisaillement de compositions adhésives selon l'invention

3 éprouvettes ont été réalisées en utilisant une composition selon l'invention comprenant respectivement 6% de chitosane désacétylé ayant un degré de désacétylation supérieur ou égal à 75%, 2% d'acide acétique et une teneur variable en glycérol égale à 0,5, 1 et 1,5%. L'éprouvette de contrôle a été réalisée en utilisant une composition comprenant 6% de chitosane désacétylé ayant un degré de désacétylation supérieur ou égal à 75% et 2% d'acide acétique.
Les valeurs de résistance en cisaillement sont présentées dans le tableau II.

Tableau II

| Composition adhésive | Résistance en cisaillement (MPa) |
|---|---|
| Contrôle | 16,5 |
| 6% chitosane<br>2% acide acétique<br>0,5% glycérol | 25 |
| 6% chitosane<br>2% acide acétique<br>1% glycérol | 26,2 |
| 6% chitosane<br>2% acide acétique<br>1,5% glycérol | 24,7 |

Les résultats montrent que les compositions selon l'invention montrent une résistance en cisaillement améliorée.

Exemple 3: évaluation de la résistance en cisaillement de compositions adhésives selon l'invention

5 éprouvettes ont été réalisées en utilisant une composition selon l'invention comprenant respectivement 5% de chitosane désacétylé ayant un degré de désacétylation supérieur ou égal à 75%, 1% d'acide acétique, une teneur variable en glycérol égale à 0,5, 1 et 1,5% et une teneur variable en citrate de trisodium dihydraté égale à 0,11, 0,14 et 0,17%. L'éprouvette de contrôle a été réalisée en utilisant une composition comprenant 5% de chitosane désacétylé ayant un degré de désacétylation supérieur ou égal à 75% et 1 % d'acide acétique.
Les valeurs de résistance en cisaillement sont présentées dans le tableau III.

Tableau III

| Composition adhésive | Résistance en cisaillement (MPa) |
|---|---|
| Contrôle | 22,2 |
| 5% chitosane<br>1% acide acétique | 31,8 |

(suite)

| Composition adhésive | Résistance en cisaillement (MPa) |
|---|---|
| 0,5% glycérol | |
| 0,14% citrate | |
| 5% chitosane<br>1% acide acétique<br>1% glycérol<br>0,14% citrate | 33,9 |
| 5% chitosane<br>1% acide acétique<br>1,5% glycérol<br>0,14% citrate | 28,4 |
| 5% chitosane<br>1% acide acétique<br>1% glycérol<br>0,11% citrate | 33 |
| 5% chitosane<br>1% acide acétique<br>1% glycérol<br>0,17% citrate | 34,7 |

Les résultats montrent que les compositions selon l'invention montrent une résistance en cisaillement améliorée.

Exemple 4 : comparaison de la résistance en cisaillement entre une composition adhésive selon l'invention et un adhésif structural synthétique

2 éprouvettes ont été réalisées :

- la première éprouvette en utilisant une composition selon l'invention comprenant 6% de chitosane désacétylé ayant un degré de désacétylation supérieur ou égal à 75%, 2% d'acide acétique et 1% de glycérol,
- la seconde en utilisant un adhésif structural à base époxydes commercialisé sous le nom Epoxy adhesive E-504 par la société EPOTECHNY. Les éléments d'alliage d'aluminium formant la seconde éprouvette ont été fixés aux autres et maintenus pendant 40h à une température de 40°C.

Les valeurs de résistance en cisaillement sont présentées dans le tableau IV.

Tableau IV

| Composition adhésive | Résistance en cisaillement (MPa) |
|---|---|
| Composition selon l'invention<br>6% chitosane<br>2% acide acétique<br>1% glycérol | 39,4 |
| Epoxy adhesive E-504 | 39,1 |

Les résultats montrent que les propriétés d'adhésion d'une composition selon l'invention sont équivalentes à celles d'un adhésif à base époxydes et donc que les compositions selon l'invention représentent une alternative aux adhésifs structuraux d'origine synthétique.

Exemple 5 : évaluation de l'épaisseur d'adhésion de compositions adhésives selon l'invention

L'épaisseur d'adhésion a été déterminée pour les compositions adhésives suivantes :

- composition comprenant 4% de chitosane (Sigma Aldrich ; poids moléculaire : $3{,}308.10^5$ g/mol) et 1 % d'acide acétique,
- composition comprenant 6% de chitosane, 1% d'acide acétique, 1% de glycérol et 0,14% de citrate,
- composition comprenant 6% de chitosane, 1% d'acide acétique, 1% de glycérol, 0,14% de citrate et 10% d'amidon de blé soluble.

Les mesures d'épaisseur adhésive ont été réalisées dans un bécher de 50 ml, sur des pièces en bois (27x27x9 $mm^3$) et sur des éprouvettes d'aluminium traitées par de la soude comme présentées dans la figure 1 (dimension de chaque élément 1 et 2 : 350x20x2 $mm^3$; dimension de chaque zone de recouvrement entre les éléments 1 et 2 : 1000 $mm^2$).

La composition adhésive a été appliquée de manière identique pour chacun des supports et l'épaisseur finale a été mesurée à l'aide d'un pied à coulisse.

Les valeurs de l'épaisseur adhésive sont présentées dans les tableaux V, VI et VII ci-dessous et sont exprimées en mm :

Tableau V : bécher

| Volume appliqué (ml) Composition adhésive | 2,5 | 5 | 7,5 |
|---|---|---|---|
| 4% chitosane 1% acide acétique | 0,085 | 0,155 | 0,29 |
| 6% chitosane 1% acide acétique 1% glycérol 0,14% citrate | 0,215 | 0,47 | 0,66 |
| 6% chitosane 1% acide acétique 1% glycérol 0,14% citrate 10% d'amidon | 0,225 | 0,515 | 0,83 |

Tableau VI : pièces en bois

| Volume appliqué (ml) Composition adhésive | 2,5 | 5 | 7,5 |
|---|---|---|---|
| 4% chitosane 1% acide acétique | 0,07 | 0,1 | 0,315 |
| 6% chitosane 1% acide acétique 1% glycérol 0,14% citrate | 0,051 | 0,061 | 0,236 |
| 6% chitosane 1% acide acétique 1% glycérol 0,14% citrate 10% d'amidon | 0,3 | ,08 | 0,9 |

Tableau VII : éprouvettes d'aluminium

| Volume appliqué (ml) Composition adhésive | 2,5 | 5 | 7,5 |
|---|---|---|---|
| 4% chitosane 1% acide acétique | 0,04 | 0,02 | 0,02 |
| 6% chitosane 1% acide acétique 1% glycérol 0,14% citrate | 0,035 | 0,02 | 0,045 |
| 6% chitosane 1% acide acétique 1% glycérol 0,14% citrate 10% d'amidon | 0,6 | 0,51 | 0,2 |

Les résultats ci-dessus montrent que l'épaisseur de la composition adhésive selon l'invention après application est améliorée par rapport à une composition ne comprenant que du chitosane et de l'acide acétique, et ainsi que la composition selon l'invention possède de meilleures propriétés relatives au retrait.

Il est à noter que l'ajout d'amidon dans la composition selon l'invention en tant que charge polysaccharidique permet de diminuer significativement le retrait.

Exemple 6 : évaluation de l'influence de la présence d'amidon sur la résistance au cisaillement d'une composition adhésive à base de chitosane

Les mesures de résistance au cisaillement ont été réalisées comme dans les exemples 1, 2, 3 et 4.

Les compositions suivantes ont été testées :

- composition comprenant 4% de chitosane et 1% d'acide acétique,
- composition comprenant 4% de chitosane, 1% d'acide acétique et 5% d'amidon de blé soluble,
- composition comprenant 4% de chitosane, 1% d'acide acétique et 10% d'amidon de blé soluble.

Les résultats sont présentés dans le tableau VIII ci-dessous :

Tableau VIII

| Composition adhésive | Résistance au cisaillement (MPa) |
|---|---|
| 4% chitosane 1 % acide acétique | 20,1 |
| 4% chitosane 1 % acide acétique 5% d'amidon | 19,5 |
| 4% chitosane 1 % acide acétique 10% d'amidon | 20,6 |

Les résultats ci-dessus montrent que l'ajout d'amidon dans une composition adhésive à base de chitosane n'influence pas significativement les propriétés adhésives de ladite composition.

Ces résultats montrent ainsi que l'introduction d'amidon, dans une composition adhésive selon l'invention, n'altère pas les propriétés adhésives de ladite composition.

**Revendications**

1. Composition adhésive comprenant :

    (a) de 3 à 10% en poids d'au moins un chitosane désacétylé ayant un degré de désacétylation supérieur ou égal à 75% ;
    (b) de 0,5 à 5% en poids d'au moins un acide organique ou inorganique ;

(c) au moins un composé choisi parmi :

(c1) de 0,001 à 8% en poids d'un composé polyanionique,
(c2) de 0,001 à 2% en poids d'un polyol de formule $C_nH_{2n+2}O_n$ dans laquelle n représente un nombre entier compris entre 2 et 20 ;

(d) une quantité complémentaire d'un support aqueux.

2. Composition selon la revendication 1 comprenant de 4 à 6% de chitosane ou de 1 à 3% d'acide ou de 0,01 à 5% de composé (c1) ou de 0,5 à 1,5% de composé (c2) ou leurs combinaisons totales ou partielles.

3. Composition selon les revendications 1 ou 2 dans laquelle le chitosane a une masse molaire allant de 10 000 à 500 000 g/mol ou dans laquelle l'acide est l'acide sulfurique en solution aqueuse ou un acide organique en solution aqueuse choisi parmi les acides carboxyliques.

4. Composition selon les revendications 1 à 3 dans laquelle le composé (c1) est choisi parmi les acides hydroxycarboxyliques, les acides polycarboxyliques, les acides hydroxypolycarboxyliques, les polysaccharides, leurs sels ou leurs mélanges; ou dans laquelle le composé (c2) est un polyol pour lequel n est compris entre 2 et 10.

5. Composition selon les revendications 1 à 4 dans laquelle le composé (c1) est le citrate de trisodium dihydraté ou le composé (c2) est choisi parmi le glycérol ou le mannitol.

6. Composition selon les revendications 1 à 5 pour laquelle le ratio (a)/(b) va de 3 /1 à 10 /3 ou le ratio (a)/(c1) va de 1/2 à 200/1 ou le ratio (a)/(c2) va de 2 /1 à 12 /1.

7. Composition selon les revendications 1 à 6 comprenant :

(a) de 3 à 10% en poids d'au moins un chitosane désacétylé ayant un degré de désacétylation supérieur ou égal à 75% ;
(b) de 0,5 à 5% en poids d'au moins un acide organique ou inorganique ;
(c1) de 0,001 à 8% en poids d'un composé polyanionique ;
(c2) de 0,001 à 2% en poids d'un polyol de formule $C_nH_{2n+2}O_n$ dans laquelle n représente un nombre entier compris entre 2 et 10 ;
(d) une quantité complémentaire d'un support aqueux.

8. Composition selon les revendications 1 à 7 comprenant en outre une charge polysaccharidique (e) ou une charge polysaccharidique (e) qui est différente du composé (c1).

9. Composition selon la revendication 8 dans laquelle la charge polysaccharidique (e) est choisie parmi les amidons, les fractions d'amidon et les farines amylacées.

10. Composition selon les revendications 8 ou 9 dans laquelle la charge polysaccharidique (e) est un amidon de céréales.

11. Composition selon les revendications 8 à 10 comprenant de 0,1 à 20% en poids de charge polysaccharidique (e).

12. Composition selon les revendications 8 à 11 pour laquelle le ratio (a)/(e) va de 1/10 à 1/1.

13. Composition selon les revendications 8 à 12 comprenant :

(a) de 3 à 10% en poids d'au moins un chitosane désacétylé ayant un degré de désacétylation supérieur ou égal à 75% ;
(b) de 0,5 à 5% en poids d'au moins un acide organique ou inorganique ;
(c1) de 0,001 à 8% en poids d'un composé polyanionique ;
(c2) de 0,001 à 2% en poids d'un polyol de formule $C_nH_{2n+2}O_n$ dans laquelle n représente un nombre entier compris entre 2 et 10,
(d) une quantité complémentaire d'un support aqueux, et
(e) de 0,1 à 20% en poids d'une charge polysaccharidique.

**14.** Objet composite comprenant une composition adhésive selon les revendications 1 à 13 et au moins un élément comprenant un autre matériau choisi parmi du bois, un produit dérivé du bois, un sous-produit du bois ou un alliage d'aluminium.

**15.** Procédé de collage comprenant l'application d'une composition selon les revendications 1 à 13.


**Patentansprüche**

**1.** Klebstoffzusammensetzung, aufweisend:

(a) 3 bis 10 Gewichts% mindestens eines deacetylierten Chitosans, das einen Deacetylierungsgrad von mehr als oder gleich 75% aufweist;
(b) 0,5 bis 5 Gewichts% mindestens einer organischen oder anorganischen Säure;
(c) mindestens eine Verbindung ausgewählt aus:

(c1) 0,001 bis 8 Gewichts% einer polyanionischen Verbindung,
(c2) 0,001 bis 2 Gewichts% eines Polyols der Formel $C_nH_{2n+2}O_n$, in der n eine ganze Zahl zwischen einschließlich 2 und 20 bedeutet;

(d) einen ergänzenden Anteil einer wasserhaltigen Trägersubstanz.

**2.** Zusammensetzung gemäß Anspruch 1, aufweisend 4 bis 6 % Chitosan oder 1 bis 3 % Säure oder 0,01 bis 5 % der Verbindung (c1) oder 0,5 bis 1,5 % der Verbindung (c2) oder deren vollständige oder teilweise Kombinationen.

**3.** Zusammensetzung gemäß Anspruch 1 oder 2, in der das Chitosan eine Molmasse von 10.000 bis zu 500.000 g/Mol aufweist oder in der die Säure Schwefelsäure in wässriger Lösung oder eine organische Säure in wässriger Lösung, ausgewählt aus Carbonsäuren, ist.

**4.** Zusammensetzung gemäß einem der Ansprüche 1 bis 3, in der die Verbindung (c1) ausgewählt ist aus Hydroxycarbonsäuren, Polycarbonsäuren, Hydroxypolycarbonsäuren, Polysacchariden, ihren Salzen oder ihren Mischungen; oder
in der die Verbindung (c2) ein Polyol ist, für das n zwischen einschließlich 2 und 10 liegt.

**5.** Zusammensetzung gemäß einem der Ansprüche 1 bis 4, in der die Verbindung (c1) Trinatriumcitrat-Dihydrat ist oder die Verbindung (c2) ausgewählt ist aus Glycerol oder Mannitol.

**6.** Zusammensetzung gemäß einem der Ansprüche 1 bis 5, in der das Verhältnis (a)/(b) zwischen einschließlich 3/1 und 10/3 liegt oder das Verhältnis (a)/(c1) zwischen einschließlich 1/2 und 200/1 liegt oder das Verhältnis (a)/(c2) zwischen einschließlich 2/1 und 12/1 liegt.

**7.** Zusammensetzung gemäß einem der Ansprüche 1 bis 6, aufweisend:

(a) 3 bis 10 Gewichts% mindestens eines deacetylierten Chitosans, das einen Deacetylierungsgrad von mehr als oder gleich 75% aufweist;
(b) 0,5 bis 5 Gewichts% mindestens einer organischen oder anorganischen Säure;
(c1) 0,001 bis 8 Gewichts% einer polyanionischen Verbindung;
(c2) 0,001 bis 2 Gewichts% eines Polyols der Formel $C_nH_{2n+2}O_n$, in der n eine ganze Zahl zwischen einschließlich 2 und 20 bedeutet;
(d) einen ergänzenden Anteil einer wasserhaltigen Trägersubstanz.

**8.** Zusammensetzung gemäß einem der Ansprüche 1 bis 7, ferner aufweisend einen Polysaccharid-Füllstoff (e) oder einen Polysaccharid-Füllstoff (e), der verschieden ist von der Verbindung (c1).

**9.** Zusammensetzung gemäß Anspruch 8, in der der Polysaccharid-Füllstoff (e) ausgewählt ist aus Stärken, Stärkefraktionen und stärkehaltigen Mehlen.

**10.** Zusammensetzung gemäß Anspruch 8 oder 9, in der der Polysaccharid-Füllstoff (e) eine Getreidestärke ist.

**11.** Zusammensetzung gemäß einem der Ansprüche 8 bis 10, aufweisend 0,1 bis 20 Gewichts% des Polysaccharid-Füllstoffs (e).

**12.** Zusammensetzung gemäß einem der Ansprüche 8 bis 11, für die das Verhältnis (a)/(e) zwischen einschließlich 1/10 und 1/1 liegt.

**13.** Zusammensetzung gemäß einem der Ansprüche 8 bis 12, aufweisend:

(a) 3 bis 10 Gewichts% mindestens eines deacetylierten Chitosans, das einen Deacetylierungsgrad von mehr als oder gleich 75% aufweist;
(b) 0,5 bis 5 Gewichts% mindestens einer organischen oder anorganischen Säure;
(c1) 0,001 bis 8 Gewichts% einer polyanionischen Verbindung,
(c2) 0,001 bis 2 Gewichts% eines Polyols der Formel $C_nH_{2n+2}O_n$, in der n eine ganze Zahl zwischen einschließlich 2 und 20 bedeutet;
(d) einen ergänzenden Anteil einer wasserhaltigen Trägersubstanz, und
(e) 0,1 bis 20 Gewichts% eines Polysaccharid-Füllstoffs.

**14.** Verbundgegenstand, aufweisend eine Klebstoffzusammensetzung gemäß einem der Ansprüche 1 bis 13 und mindestens einen Bestandteil, der ein anderes Material aufweist, ausgewählt aus Holz, einem Holzprodukt, einem Holz-Nebenprodukt oder einer Aluminium-Legierung.

**15.** Verfahren zum Verkleben, aufweisend die Anwendung einer Zusammensetzung gemäß einem der Ansprüche 1 bis 13.

**Claims**

**1.** An adhesive composition comprising:

(a) from 3 to 10% by weight of at least one deacetylated chitosan having a deacetylation degree greater than or equal to 75%;
(b) from 0.5 to 5% by weight of at least one organic or inorganic acid;
(c) at least one compound selected from:

(c1) from 0.001 to 8% by weight of a polyanionic compound,
(c2) from 0.001 to 2% by weight of a polyol of formula $C_nH_{2n+2}O_n$ wherein n represents an integer comprised between 2 and 20;

(d) an additional amount of an aqueous support.

**2.** The composition according to claim 1, comprising from 4 to 6% of chitosan or from 1 to 3% of acid or from 0.01 to 5% of compound (c1) or from 0.5 to 1.5% of compound (c2) or total or partial combinations thereof.

**3.** The composition according to claims 1 or 2, wherein the chitosan has a molar mass ranging from 10,000 to 500,000 g/mol or wherein the acid is sulfuric acid in an aqueous solution or an organic acid selected from carboxylic acids in an aqueous solution.

**4.** The composition according to claims 1 to 3, wherein the compound (c1) is selected from hydroxycarboxylic acids, polycarboxylic acids, hydroxypolycarboxylic acids, polysaccharides, salts or mixtures thereof; or wherein the compound (c2) is a polyol for which n is comprised between 2 and 10.

**5.** The composition according to claims 1 to 4, wherein the compound (c1) is trisodium citrate dihydrate or the compound (c2) is selected from glycerol or mannitol.

**6.** The composition according to claims 1 to 5, for which the ratio (a)/(b) ranges from 3/1 to 10/3 or the ratio (a)/(c1) ranges from 1/2 to 200/1 or the ratio (a)/(c2) ranges from 2/1 to 12 /1.

**7.** The composition according to claims 1 to 6, comprising:

(a) from 3 to 10% by weight of at least one deacetylated chitosan having a deacetylation degree greater than or equal to 75%;
(b) from 0.5 to 5% by weight of at least one organic or inorganic acid;
(c1) from 0.001 to 8% by weight of a polyanionic compound;
(c2) from 0.001 to 2% by weight of a polyol of formula $C_nH_{2n+2}O_n$ wherein n represents an integer comprised between 2 and 10;
(d) an additional amount of an aqueous support.

8. The composition according to claims 1 to 7, further comprising a polysaccharide filler (e) or a polysaccharide filler (e) which is different from the compound (c1).

9. The composition according to claim 8, wherein the polysaccharide filler (e) is selected from starches, starch fractions and amylaceous flours.

10. The composition according to claims 8 or 9, wherein the polysaccharide filler (e) is a starch from cereals.

11. The composition according to claims 8 to 10, comprising from 0.1 to 20% by weight of polysaccharide filler (e).

12. The composition according to claims 8 to 11 for which the ratio (a)/(e) ranges from 1/10 to 1/1.

13. The composition according to claims 8 to 12 comprising:

(a) from 3 to 10% by weight of at least one deacetylated chitosan having a deacetylation degree greater than or equal to 75%;
(b) from 0.5 to 5% by weight of at least one organic or inorganic acid;
(c1) from 0.001 to 8% by weight of a polyanionic compound;
(c2) from 0.001 to 2% by weight of a polyol of formula $C_nH_{2n+2}O_n$ wherein n represents an integer comprised between 2 and 10,
(d) an additional amount of an aqueous support, and
(e) from 0.1 to 20% by weight of a polysaccharide filler.

14. A composite object comprising an adhesive composition according to claims 1 to 13 and at least one element comprising another material selected among wood, a product derived from wood, a byproduct of wood or an aluminum alloy.

15. An adhesive bonding method comprising the application of a composition according to claims 1 to 13.

Figure 1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **K.UMEMURA et al.** *Koen Yoshishu - Nippon Setchaku Gakkai Nenji Taikai,* 2002, vol. 40, 71-72
- *Journal of Wood Science,* 2010
- **VOLKERSEN.** *Luftfahrtforschung,* 1938, vol. 15, 41-47